# FASCICULE DE BREVET EUROPEEN

(11) **EP 3 319 497 B1**
(45) Date de publication et mention de la délivrance du brevet: **08.05.2019**
(21) Numéro de dépôt: 16742371.4
(22) Date de dépôt: 04.07.2016
(51) Int. Cl.: A47J 45/07, A47J 45/10

(54) **POIGNÉE AMOVIBLE**
ABNEHMBARER GRIFF
REMOVABLE HANDLE

(30) Priorité: 08.07.2015 FR 1556467
(43) Date de publication de la demande: 16.05.2018
(73) Titulaire: SEB S.A., 69130 Ecully (FR)
(72) Inventeur: MONTGELARD, Michel, 73100 Aix Les Bains (FR)
(74) Mandataire: Bourrières, Patrice
(86) Numéro de dépôt international: PCT/FR2016/051690
(87) Numéro de publication internationale: WO 2017/006040

(56) Documents cités:
- WO-A1-2013/007932
- JP-A- 2014 064 884

## Description

La présente invention concerne une poignée amovible destinée à coopérer avec un récipient de cuisson, le récipient de cuisson tel une casserole ou un fait-tout, ayant une paroi latérale qui est prolongée vers le haut par une portion recourbée vers l'extérieur.

On notera que, dans ce document, les termes «horizontal», «vertical», «inférieur», «supérieur», «longitudinal», «transversal», «haut», «bas», employés pour décrire la poignée amovible, font référence à cette poignée en situation d'usage, lorsqu'elle est montée sur une paroi latérale d'un récipient de cuisson, lequel est posé sur un plan horizontal.

Il est connu, du brevet JP2014064884, une poignée amovible destinée à coopérer avec un récipient de cuisson ayant une paroi latérale qui est prolongée vers le haut par une portion recourbée vers l'extérieur comportant une extrémité libre. La poignée amovible comprend un organe d'appui interne et un organe d'appui externe destinés à venir contre, respectivement, une surface intérieure et une surface extérieure de la paroi latérale, ainsi qu'un organe d'appui supérieur destiné à venir contre l'extrémité libre de la portion recourbée. La poignée comprend un verrou mobile en translation entre une position ouverte et une position fermée. Dans la position fermée, une face supérieure de l'extrémité libre est en appui contre l'organe d'appui supérieur et le verrou est glissé sous une face inférieure de l'extrémité libre. Ainsi, un jeu est nécessaire entre le verrou et la face inférieure de l'extrémité libre pour permettre la translation du verrou.

Une telle poignée présente donc l'inconvénient de ne pas être parfaitement immobilisée sur le récipient de cuisson, notamment selon un axe vertical correspondant à l'axe vertical du récipient de cuisson. En conséquence en usage, et en particulier dans le cas où la poignée amovible est soumise à des sollicitations dynamiques liées par exemple à des cuissons sautées ou à des retournements de crêpes, des mouvements parasites apparaissent entre la poignée amovible et le récipient de cuisson.

De plus, une telle poignée ne fonctionne que pour une épaisseur donnée de la paroi latérale et en particulier de l'extrémité libre, et ne permet donc pas de s'adapter à plusieurs épaisseurs de parois latérales, notamment à plusieurs épaisseurs de l'extrémité libre. Dans le cas d'une épaisseur plus importante que l'épaisseur donnée, le verrou ne peut plus coulisser sous la face inférieure de l'extrémité libre et l'extrémité libre n'est plus maintenue. Dans le cas d'une épaisseur plus faible que l'épaisseur donnée, le jeu entre le verrou et la face inférieure de l'extrémité libre est important et la poignée est mal maintenue sur le récipient de cuisson.

Le but de la présente invention est de remédier aux inconvénients précités et de proposer une poignée amovible destinée à coopérer avec un récipient de cuisson présentant un maintien amélioré pour permettre à l'utilisateur de la manipuler facilement, en toute sécurité.

Un autre but de l'invention est de proposer une poignée amovible qui soit de conception simple et économique à mettre en oeuvre.

Un autre but de l'invention est de proposer un récipient de cuisson qui puisse être rangé facilement.

Ces buts sont atteints avec une poignée amovible destinée à coopérer avec un récipient de cuisson ayant une paroi latérale qui est prolongée vers le haut par une portion recourbée vers l'extérieur comportant une extrémité libre, ladite poignée amovible s'étendant selon une direction longitudinale et comprenant un organe d'appui interne et un organe d'appui externe destinés à venir contre, respectivement, une surface intérieure et une surface extérieure de la paroi latérale, ainsi qu'un organe d'appui supérieur destiné à venir contre l'extrémité libre de la portion recourbée, ladite poignée amovible comprenant un verrou mobile en translation entre une position ouverte et une position fermée, caractérisée en ce que le verrou comporte une paroi de blocage destinée à être éloignée de l'organe d'appui interne dans la position ouverte du verrou et destinée à générer une force sur l'extrémité libre dans la position fermée du verrou, sous l'action d'un moyen de mise en pression, ladite force comportant une composante verticale de blocage de l'extrémité libre de la portion recourbée contre l'organe d'appui supérieur.

Le verrou est mobile par rapport à l'organe d'appui interne, l'organe d'appui externe et l'organe d'appui supérieur qui sont les trois fixes.

Par organe d'appui supérieur, on comprend un organe d'appui contre lequel est appliquée l'extrémité libre de la portion recourbée sous l'action de la force générée par la paroi de blocage, dans la position fermée du verrou.

Dans la position ouverte du verrou, la paroi de blocage est destinée à être éloignée de l'organe d'appui interne pour permettre l'introduction de la paroi latérale entre les organes d'appui interne et externe et permettre à l'extrémité libre de venir contre l'organe d'appui supérieur. Dans la position fermée du verrou, la paroi de blocage est destinée à générer une force sur l'extrémité libre comportant une composante verticale de blocage, sous l'action d'un moyen de mise en pression, pour immobiliser l'extrémité libre de la portion recourbée contre l'organe d'appui supérieur et ainsi supprimer le jeu selon un axe vertical correspondant à l'axe vertical du récipient de cuisson.

Ainsi, dans la position fermée du verrou, la poignée amovible comporte deux zones d'appui permettant le maintien de l'extrémité libre de la portion recourbée et deux zones d'appui formées par les organes d'appui interne et externe permettant un maintien de la paroi latérale.

L'absence de jeu entre le verrou et la face inférieure de l'extrémité libre lors des manipulations du récipient de cuisson permet d'améliorer l'ergonomie et la qualité perçue par l'utilisateur.

Avantageusement, le verrou est mobile en translation selon la direction longitudinale.

Cette disposition permet de réduire les efforts générés par l'extrémité libre sur le verrou selon sa direction de déplacement. En effet, l'extrémité libre sollicite la paroi de blocage selon un axe vertical, sensiblement perpendiculaire à la direction de déplacement du verrou selon l'axe longitudinal de la poignée amovible.

De préférence, la paroi de blocage est inclinée ou incurvée et en ce que dans un plan de coupe vertical comprenant la direction longitudinale, une droite appartenant à la paroi de blocage inclinée ou une tangente à la paroi de blocage incurvée et la direction longitudinale forment un angle α compris entre 40 et 50°, de préférence 45°.

Cette disposition permet, à partir de la force de fermeture du verrou générée par les moyens de mise en pression selon la direction longitudinale, de générer sur l'extrémité libre une force avec une composante verticale de blocage de l'extrémité libre de la portion recourbée contre l'organe d'appui supérieur et ainsi de supprimer le jeu.

Avantageusement, la paroi de blocage est destinée à coopérer avec une arête inférieure de l'extrémité libre dans la position fermée du verrou.

Par arête inférieure de l'extrémité libre, on comprend une ligne d'intersection d'une surface extérieure de la portion recourbée prolongeant la surface extérieure de la paroi latérale et d'une surface sensiblement verticale, décalée d'une valeur donnée vers l'extérieur de la paroi.

Cette disposition permet d'obtenir un bon maintien de l'extrémité libre par la paroi de blocage inclinée lorsque le verrou est dans sa position fermée.

Avantageusement, l'organe d'appui interne comporte des première et deuxième zones d'appui qui sont agencées de part et d'autre de l'organe d'appui externe selon une direction transversale à la direction longitudinale.

Ainsi, dans la position fermée du verrou, les première et deuxième parties d'appui forment deux zones d'appui distantes l'une de l'autre et destinées à coopérer avec l'arête inférieure. Cette disposition permet d'améliorer le blocage de l'extrémité libre de la portion recourbée contre l'organe d'appui supérieur et également de supprimer le jeu de la poignée amovible autour de la direction longitudinale.

De manière avantageuse, le verrou est mis en forme à partir d'une plaque métallique.

De préférence, l'organe d'appui externe comporte des première et deuxième zones d'appui qui sont agencées de part et d'autre de l'organe d'appui interne selon un axe transversal à l'axe longitudinal.

Ainsi, dans la position fermée du verrou, les première et deuxième zones d'appui sont distantes l'une de l'autre et sont destinées à coopérer avec la surface intérieure de la paroi. Cette disposition permet d'améliorer le maintien de la poignée amovible dans une direction transversale à l'axe longitudinal, incluse dans un plan horizontal lorsque la poignée amovible est assemblée sur le récipient de cuisson.

Avantageusement, l'organe d'appui supérieur comporte une face d'appui destinée à coopérer avec une arête supérieure de l'extrémité libre de la portion recourbée.

Par arête supérieure de l'extrémité libre, on comprend une ligne d'intersection d'une surface intérieure de la portion recourbée prolongeant la surface intérieure de la paroi latérale et d'une surface sensiblement verticale, décalée d'une valeur donnée vers l'extérieur de la paroi.

Les arrêtes inférieure et supérieure délimitent l'épaisseur de l'extrémité libre de la portion recourbée.

Par une face d'appui destinée à coopérer avec une arête supérieure, on comprend que lorsque la poignée amovible est assemblée sur le récipient de cuisson, dans un plan de coupe vertical, la face d'appui empêche un déplacement de l'arête supérieure selon une direction comportant une composante verticale, vers le haut, et une composante horizontale, radiale externe au récipient de cuisson.

Ainsi, la poignée amovible comporte une face d'appui et une paroi de blocage qui immobilisent les arêtes supérieure et inférieure de l'extrémité libre.

De préférence, la face d'appui est inclinée ou incurvée et dans un plan de coupe vertical comprenant la direction longitudinale, une droite appartenant à la face d'appui inclinée ou une tangente à la face d'appui incurvée et la direction longitudinale forment un angle β compris entre 50 et 70°, de préférence 60°.

Ainsi, la poignée amovible comporte une face d'appui et une paroi de blocage qui forment, lorsque le verrou est en position fermée, un coin qui immobilise les arêtes supérieure et inférieure de l'extrémité libre.

De manière avantageuse, la face d'appui et/ou la paroi de blocage comportent un traitement de surface pour améliorer l'adhérence de l'arête supérieure et/ou de l'arête inférieure.

Avantageusement, la poignée amovible comporte une pièce de structure s'étendant selon la direction longitudinale et la pièce de structure comporte l'organe d'appui externe, l'organe d'appui interne et l'organe d'appui supérieur.

Par la pièce de structure comporte l'organe d'appui externe, l'organe d'appui interne et l'organe d'appui supérieur, on comprend que la pièce de structure, l'organe d'appui externe, l'organe d'appui interne et l'organe d'appui supérieur forment une seule et même pièce. Cette disposition permet d'obtenir une poignée amovible de conception simple et économique à mettre en oeuvre.

De préférence, la pièce de structure est mise en forme à partir d'une plaque métallique.

Cette disposition permet d'obtenir une pièce résistante et compacte.

Avantageusement, les moyens de mise en pression comportent un ressort de compression.

Cette disposition permet d'adapter la position du verrou à l'épaisseur et à la longueur de l'extrémité libre.

De préférence, la poussée du ressort sur le verrou s'effectue selon la direction longitudinale lorsque le verrou est en position fermée.

L'effort appliqué par le ressort, via la paroi de blocage du verrou, sur l'arête inférieure produit une force suffisante pour l'immobilisation de l'arête supérieure contre l'organe d'appui supérieur, et ainsi il n'est pas nécessaire d'ajouter un moyen supplémentaire de maintien du verrou en position fermée, notamment un dispositif anti recul du verrou.

Avantageusement, la poignée amovible comporte des moyens de manoeuvre du verrou à genouillère, les moyens de manoeuvre comportant un levier, une bielle et un ressort de compression.

Cette disposition permet d'obtenir des moyens de manoeuvre du verrou très ergonomiques.

Avantageusement, la poignée comporte une patte comportant l'organe d'appui interne.

De préférence, l'organe d'appui supérieur est formé par une face interne de la patte.

De manière avantageuse, le verrou est mobile par rapport aux organes d'appui interne, d'appui externe et d'appui supérieur qui sont tous les trois solidaires et fixes.

L'invention concerne également un ensemble formé par au moins un récipient de cuisson comportant une paroi latérale qui est prolongée vers le haut par une portion recourbée vers l'extérieur et comportant une extrémité libre munie d'une arête supérieure et d'une arête inférieure, et une poignée amovible telle que précédemment décrite.

On comprendra mieux les buts, aspects et avantages de la présente invention, d'après la description donnée ci-après des modes particuliers de réalisation de l'invention présentés à titre d'exemple non limitatif, en se référant aux dessins annexés dans lesquels :
- la figure 1 est une vue en perspective d'une poignée amovible selon un mode particulier de réalisation de l'invention,
- la figure 2 est une vue en perspective éclatée de la poignée amovible de la figure 1,
- la figure 3 est une vue partielle de la pièce de structure et du verrou de la poignée amovible suivant le plan de coupe III de la figure 1, la poignée amovible étant assemblée à un récipient de cuisson, partiellement représenté,
- la figure 4 est une vue du dessus de la pièce de structure, du verrou et du récipient de cuisson de la figure 3,
- la figure 5 est une vue en coupe de la poignée amovible suivant le plan de coupe V de la figure 1, le verrou étant en position fermée,
- la figure 6 est une vue en coupe de la poignée amovible suivant le plan de coupe V de la figure 1, le verrou étant en position ouverte,
- la figure 7 est une vue en coupe de la poignée amovible suivant le plan de coupe VII de la figure 5, le levier étant dans la position de fermeture,
- la figure 8 est une vue en coupe de la poignée amovible suivant le plan de coupe VII de la figure 5, le levier étant dans la position d'amorçage,
- la figure 9 est une vue en coupe de la poignée amovible suivant le plan de coupe IX de la figure 6, le levier étant dans la position d'ouverture.
- la figure 10 est une vue en perspective du dessus d'une poignée amovible selon un autre mode particulier de réalisation de l'invention, la poignée amovible étant assemblée à un récipient de cuisson
- la figure 11 est une vue en perspective du dessous de la poignée amovible illustrée à la figure 10,
- la figure 12 est une vue en coupe de la poignée amovible suivant le plan de coupe XII de la figure 10, le récipient de cuisson étant partiellement représenté.

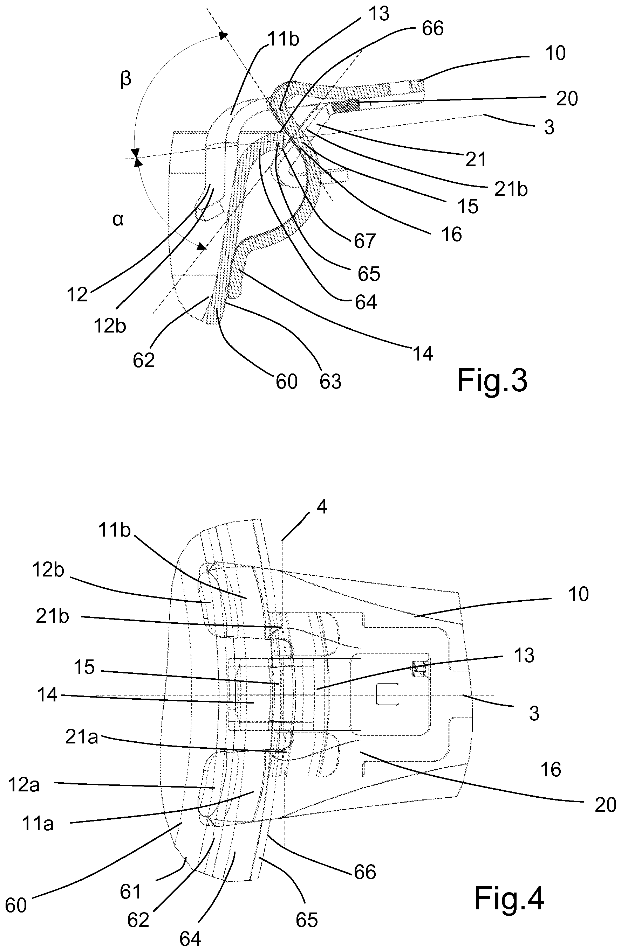

Une poignée amovible 1 est destinée à coopérer avec un récipient de cuisson 60, tel qu'illustré partiellement aux figures 3 et 4, qui comprend une paroi de fond horizontale, une paroi latérale 61 se dressant depuis la paroi de fond, et une portion recourbée 64 qui s'étend vers l'extérieur. La paroi latérale 61 comporte une surface intérieure 62 et une surface extérieure 63. La portion recourbée 64 prolonge la paroi latérale 61 et délimite l'ouverture supérieure du récipient de cuisson 60. La portion recourbée 64 comprend une extrémité libre 65 munie d'une arête supérieure 66 et d'une arête inférieure 67. Les arêtes supérieure 66 et inférieure 67 sont de préférence superposées dans un plan vertical.

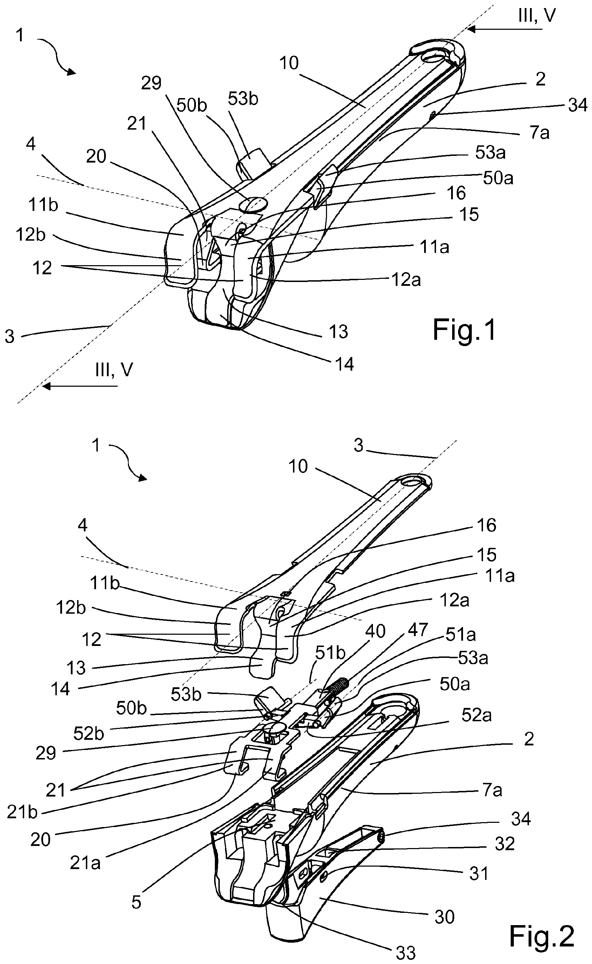

Conformément aux figures 1 à 4, la poignée amovible 1 comporte un corps de préhension 2 sur lequel est agencé une pièce de structure 10. La poignée amovible 1 s'étend selon une direction longitudinale 3. La pièce de structure 10 est une pièce métallique sensiblement plane qui comporte à une extrémité une patte centrale 13 et deux pattes latérales 11a, 11b.

La patte centrale 13 s'étend vers le bas et comprend à une extrémité un organe d'appui externe 14 destiné à coopérer avec la surface extérieure 63 de la paroi latérale 61. Dans un plan de coupe vertical orienté selon la direction longitudinale 3, l'organe d'appui externe 14 est sensiblement vertical. La patte centrale 13 comporte également un organe d'appui supérieur 15 comprenant une face d'appui 16 destinée à coopérer avec l'arête supérieure 66 de l'extrémité libre 65. La face d'appui 16 est inclinée par rapport à la direction longitudinale 3. Dans un plan de coupe vertical orienté selon la direction longitudinale 3, une droite appartenant à la face d'appui 16 inclinée et la direction longitudinale 3 forment un angle β d'environ 60° (Fig.3).

Les deux pattes latérales 11a, 11b sont agencées de part et d'autre de la patte centrale 13 dans une direction transversale 4 à la direction longitudinale 3. Les deux pattes latérales 11a, 11b s'étendent vers le bas et comportent à leur extrémité respective, des première et deuxième zones d'appui 12a, 12b formant un organe d'appui interne 12 destiné à coopérer avec la surface intérieure 62 de la paroi latérale 61.

Les première et deuxième zones d'appui 12a, 12b formant l'organe d'appui interne 12 et l'organe d'appui externe 14 sont décalées selon un axe vertical pour permettre l'introduction de la paroi latérale 61 et de l'extrémité libre 65 lors de l'assemblage de la poignée amovible 1 sur le récipient de cuisson 60.

La poignée amovible 1 comporte un organe de verrouillage formé par un verrou 20 mobile en translation selon la direction longitudinale 3 entre une position ouverte et une position fermée. Le verrou 20 comporte une paroi de blocage 21 comprenant des première et deuxième parties d'appui 21a, 21b, agencées de part et d'autre de la patte centrale 13.

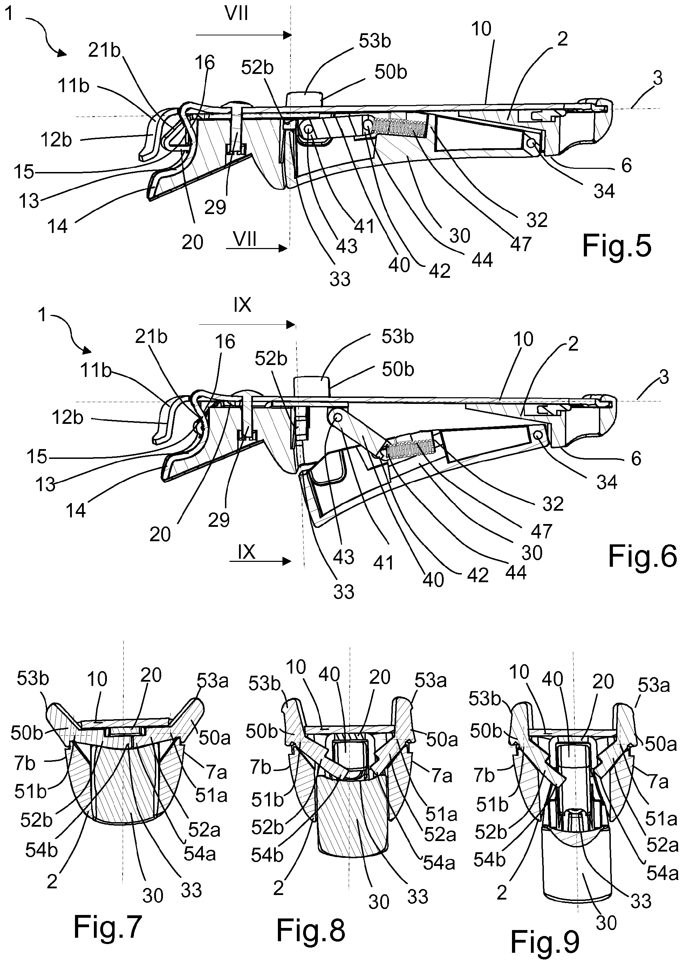

Tel que visible à la figure 6, dans la position ouverte du verrou 20, les première et deuxième parties d'appui 21a, 21b formant la paroi de blocage 21 sont destinées à être éloignées de l'organe d'appui supérieur 15 pour permettre l'introduction de la paroi latérale 61 entre les organes d'appui interne 12 et externe 14 et permettre à l'arête supérieure 66 de l'extrémité libre 65 de venir contre l'organe d'appui supérieur 15.

Tel que visible aux figures 3 et 5, dans la position fermée du verrou 20, les première et deuxième parties d'appui 21a, 21b formant la paroi de blocage 21 sont destinées à prendre appui contre l'arête inférieure 67 de l'extrémité libre 65 et ainsi bloquer l'arête supérieure 66 contre l'organe d'appui supérieur 15 (fig.3). Dans un plan de coupe vertical comprenant la direction longitudinale 3, une droite appartenant à la paroi de blocage 21 et la direction longitudinale forment un angle α compris entre 40 et 50°, de préférence 45°.

Le corps de préhension 2 comporte un logement 5 de réception et de guidage du verrou 20 (Fig.2). La pièce de structure 10 est agencée au-dessus du logement 5 et est fixée sur le corps de préhension 2 par une vis 29.

Conformément aux figures 5 et 6, La poignée amovible 1 comporte des moyens de déplacement de l'organe de verrouillage formés par le verrou 20. Les moyens de déplacement comporte un levier 30 qui est monté pivotant sur le corps de préhension 2 selon un axe de pivotement 34 s'étendant selon la direction transversale 4, perpendiculaire à la direction longitudinale 3, et une bielle 40 qui permet le déplacement du verrou 20 quand le levier 30 est pivoté. La bielle 40 est montée de façon pivotante, par une première extrémité 41 au verrou 20 selon un axe 43, et par une seconde extrémité 42 au levier 30 selon un axe 44 qui est monté coulissant dans une ouverture oblongue 31 réalisée dans le levier 30.

Le levier 30 est disposé sur une face inférieure 6 du corps de préhension 2 et est mobile entre une position de fermeture et une position d'ouverture en passant par une position intermédiaire d'équilibre instable. En outre, les moyens de déplacement comprennent également un ressort 47 qui est disposé entre l'axe 44 monté coulissant et une paroi transversale 32 du levier 30. Ce ressort 47 de compression permet un ajustement de la position du verrou 20 en position fermée à l'épaisseur de la paroi latérale 61 du récipient de cuisson 60.

Conformément à la figure 5, dans la position de fermeture du levier 30, l'axe 44 autour duquel la seconde extrémité 42 pivote est situé au-dessus d'une ligne passant par l'axe de pivotement 34 et l'axe 43. La seconde extrémité 42 est maintenue en contact de la pièce de structure 10 sous l'action du ressort 47 de compression. Ainsi, le verrou 20 reste naturellement dans sa position fermée, sans que l'utilisateur ait à maintenir un quelconque effort sur la poignée amovible 1. La position intermédiaire d'équilibre instable du levier 30 est atteinte lorsque l'axe 44 autour duquel la seconde extrémité 42 pivote, est déplacé sous la ligne passant par l'axe de pivotement 34 et l'axe 43.

Tel que visible sur les figures 7 à 9, la poignée amovible 1 comprend des moyens d'ouverture qui permettent de faire passer le verrou de sa position stable fermée à sa position ouverte. Les moyens d'ouverture comprennent des premier et deuxième boutons 50a, 50b montés pivotants sur le corps de préhension 2, respectivement, autour d'un axe 51a, 51b parallèle à la direction longitudinale 3, les premier et deuxième boutons 50a, 50b étant disposés respectivement sur un premier côté longitudinal 7a et sur un deuxième coté longitudinal 7b du corps de préhension 2. Les premier et deuxième boutons 50a, 50b comportent respectivement un bras de levier court 52a et un bras de levier long 52b et des première et deuxième ailes 53a, 53b qui permettent de manoeuvrer les bras de levier court 52a et long 52b.

Les premier et deuxième boutons 50a, 50b sont pivotants entre une position de repos dans laquelle ils sont sans effet sur le levier 30, et une position d'activation dans laquelle ils sont adaptés à entraîner le levier 30 initialement dans sa position de fermeture au-delà de sa position intermédiaire d'équilibre instable, de sorte qu'une fois cette position franchie, le levier 30 passe naturellement dans sa position stable d'ouverture. Ainsi, le verrou 20 passe naturellement dans sa position ouverte du fait notamment de l'action du ressort 47 de compression qui entraîne le verrou 20, la bielle 40 et le levier 30.

Les premier et deuxième boutons 50a, 50b sont disposés au-dessus du levier 30 et les première et deuxième ailes 53a, 53b font saillie hors des premier et deuxième cotés longitudinaux 7a, 7b, en partie supérieure du corps de préhension 2. Les bras de levier court 52a et long 52b comportent des première et deuxième extrémités d'entraînement 54a, 54b. Lorsque les premier et deuxième boutons 50a, 50b pivotent entre leur position de repos et leur position d'activation, les bras de levier court 52a et long 52b sont adaptés à venir en contact contre une surface de réception 33 portée par le levier 30. Le bras de levier court 52a est adapté à appliquer une première force pour déplacer la surface de réception 33 de façon à entraîner le levier 30 de la position de fermeture à une position d'amorçage qui est comprise entre la position de fermeture et la position intermédiaire d'équilibre instable. Le bras de levier long 52b est adapté à appliquer une deuxième force pour déplacer la surface de réception 33 de façon à entraîner le levier 30 de la position d'amorçage au-delà de la position intermédiaire d'équilibre instable. Le déplacement du levier 30 de la position de fermeture à la position d'ouverture entraine, par l'intermédiaire de la bielle 40, le verrou 20 dans sa position ouverte.

En fonctionnement, pour désassembler la poignée amovible 1 du récipient de cuisson 60, l'utilisateur saisit le corps de préhension 2 et pince avec le pouce et l'index les première et deuxième ailes 53a, 53b pour déplacer les bras de levier court 52a et long 52b de leur position de repos à leur position d'activation. Ainsi, la première extrémité d'entrainement 54a en agissant sur la surface de réception 33 fait passer le levier 30 de la position de fermeture à la position d'amorçage et la deuxième extrémité d'entrainement 54b en agissant sur la surface de réception 33 fait passer le levier 30 de la position d'amorçage au-delà de la position intermédiaire d'équilibre instable vers la position d'ouverture. Le passage du levier 30 de sa position de fermeture à sa position d'ouverture provoque par l'intermédiaire de la bielle 40 le déplacement du verrou 20 de sa position fermée à sa position ouverte.

Pour assembler la poignée amovible 1 sur le récipient de cuisson 60, l'utilisateur saisit le corps de préhension 2 et suivant le même mode opératoire que celui décrit ci-dessus amène le verrou 20 dans sa position ouverte. Il introduit l'extrémité libre 65 de la portion recourbée 64 entre les deux pattes latérales 11a, 11b et la patte centrale 13 pour amener la surface intérieure 62 de la paroi latérale 61 contre les première et deuxième zones d'appui 12a, 12b formant l'organe d'appui interne 12 et la surface extérieure 63 contre l'organe d'appui externe 14, et également amener l'arête supérieure 66 contre la face d'appui 16. Ensuite, il appuie sur le levier 30 pour le faire passer de sa position d'ouverture à sa position de fermeture et ainsi entrainer le verrou 20 de sa position ouverte à sa position fermée dans laquelle les première et deuxième parties d'appui 21a, 21b formant la paroi de blocage 21 prennent appui contre l'arête inférieure 67 de l'extrémité libre 65 et ainsi bloquent l'arête supérieure 66 contre la face d'appui 16.

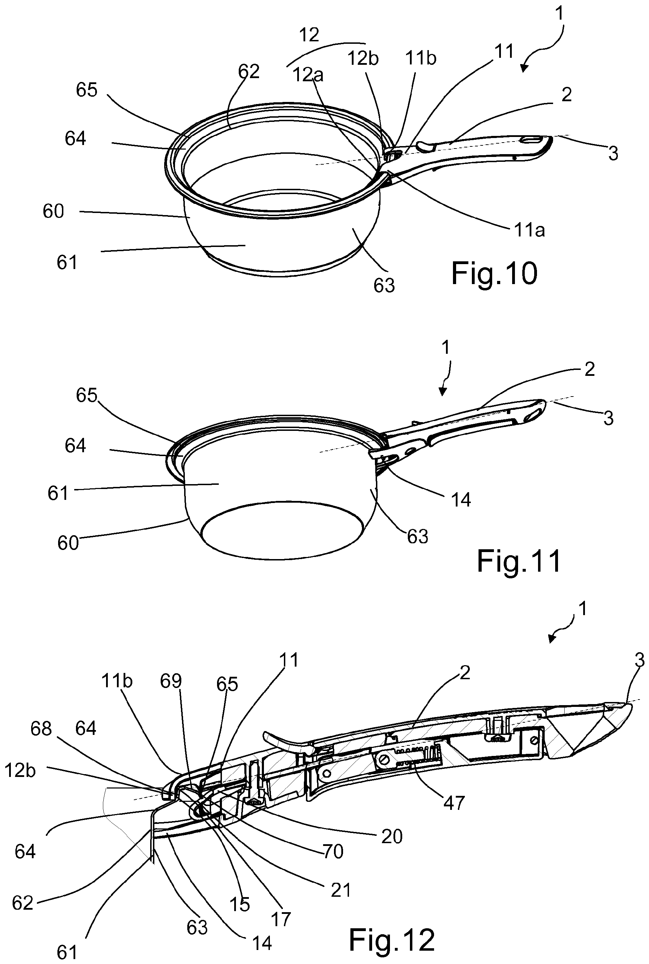

Dans une variante de réalisation illustrée aux figures 10 à 12, une poignée amovible 1 est destinée à coopérer avec un récipient de cuisson 60, qui comprend une paroi de fond horizontale, une paroi latérale 61 se dressant depuis la paroi de fond, et une portion recourbée 64 qui s'étend vers l'extérieur. La paroi latérale 61 comporte une surface intérieure 62 et une surface extérieure 63. La portion recourbée 64 prolonge la paroi latérale 61 et délimite l'ouverture supérieure du récipient de cuisson 60. La portion recourbée 64 comprend une extrémité libre 65. Par extrémité libre, on comprend une partie terminale de la portion recourbée 64.

Dans ce mode de réalisation, la portion recourbée 64 comporte une partie qui s'étend à partir de la paroi latérale radialement vers le haut, puis l'extrémité libre 65 comporte successivement une première partie 68 qui s'étend vers le haut de manière verticale, une deuxième partie 69 qui s'étend radialement vers le bas et une troisième partie 70 qui s'étend vers le bas de manière verticale.

La poignée amovible 1 comporte un corps de préhension 2 qui s'étend selon une direction longitudinale 3. La poignée comporte une patte 11 qui se divise en deux pattes latérales 11a, 11b. Les deux pattes latérales 11a, 11b s'étendent vers le bas et comportent à leur extrémité respective, des première et deuxième zones d'appui 12a, 12b formant un organe d'appui interne 12 destiné à coopérer avec la surface intérieure 62 de la paroi latérale 61, notamment avec la première partie 68. L'organe d'appui supérieur est formé par une face interne 15 de la patte 11.

La poignée comporte un organe d'appui externe 14 destiné à coopérer avec la surface extérieure 63 de la paroi latérale 61.

La poignée amovible 1 comporte un organe de verrouillage formé par un verrou 20 mobile en translation selon la direction longitudinale 3 entre une position ouverte et une position fermée. Le verrou 20 comporte une paroi de blocage 21.

Dans la position fermée du verrou 20, la paroi de blocage 21 est destinée à prendre appui et à générer une force sur l'extrémité libre 65, notamment la tranche de l'extrémité libre 65, sous l'action d'un moyen de mise en pression 47, cette force comportant une composante verticale de blocage de l'extrémité libre 65 contre l'organe d'appui supérieur 15. L'organe d'appui supérieur est formé par la face interne 17 de la patte 11, notamment par la face interne 17 de l'extrémité recourbée de la patte 11. L'organe d'appui 15 coopère avec la jonction de la partie qui s'étend à partir de la paroi latérale radialement vers le haut de la portion recourbée 64 et la première partie 68 de l'extrémité libre 65.

Dans une variante de réalisation, l'organe d'appui 15 coopère avec la jonction de la première partie 68 et de la deuxième partie 69 de l'extrémité libre 65.

Les moyens de déplacement de l'organe de verrouillage formés par le verrou 20 de ce mode de réalisation sont sensiblement identiques aux moyens de déplacement du mode de réalisation illustré aux figures 5 et 6, à la différence près que ce mode de réalisation ne met en oeuvre qu'un seul bouton pour les moyens d'ouverture.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, le verrou peut être mobile en translation suivant un axe incliné par rapport à la direction longitudinale, dans un plan de coupe vertical comprenant la direction longitudinale.

## Revendications

1. Poignée amovible (1) destinée à coopérer avec un récipient de cuisson (60) ayant une paroi latérale (61) qui est prolongée vers le haut par une portion recourbée (64) vers l'extérieur comportant une extrémité libre (65), ladite poignée amovible (1) s'étendant selon une direction longitudinale (3) et comprenant un organe d'appui interne (12) et un organe d'appui externe (14) destinés à venir contre, respectivement, une surface intérieure (62) et une surface extérieure (63) de la paroi latérale (61), ainsi qu'un organe d'appui supérieur (15) destiné à venir contre l'extrémité libre (65) de la portion recourbée (64), ladite poignée amovible (1) comprenant un verrou (20) mobile en translation entre une position ouverte et une position fermée, **caractérisée en ce que** le verrou (20) comporte une paroi de blocage (21) destinée à être éloignée de l'organe d'appui interne (12) dans la position ouverte du verrou et destinée à générer une force sur l'extrémité libre (65) dans la position fermée du verrou (20), sous l'action d'un moyen de mise en pression (47), ladite force comportant une composante verticale de blocage de l'extrémité libre (65) de la portion recourbée (64) contre l'organe d'appui supérieur (15).

2. Poignée amovible (1) selon la revendication 1, **caractérisée en ce que** le verrou (20) est mobile en translation selon la direction longitudinale (3).

3. Poignée amovible (1) selon l'une quelconque des revendications 1 à 2, **caractérisée en ce que** la paroi de blocage (21) est inclinée ou incurvée et **en ce que** dans un plan de coupe vertical comprenant la direction longitudinale (3), une droite appartenant à la paroi de blocage (21) inclinée ou une tangente à la paroi de blocage (21) incurvée et la direction longitudinale forment un angle α compris entre 40 et 50°, de préférence 45°.

4. Poignée amovible (1) selon l'une quelconque des revendications 1 à 3, **caractérisée en ce que** la paroi de blocage (21) est destinée à coopérer avec une arête inférieure (67) de l'extrémité libre (65) dans la position fermée du verrou (20).

5. Poignée amovible (1) selon l'une quelconque des revendications 1 à 4, **caractérisée en ce que** la paroi de blocage (21) comporte des première partie et deuxième parties d'appui (21a, 21b) qui sont agencées de part et d'autre de l'organe d'appui interne (12) selon une direction transversale (4) à la direction longitudinale (3).

6. Poignée amovible (1) selon l'une quelconque des revendications 1 à 5, **caractérisée en ce que** l'organe d'appui interne (12) comporte des première et deuxième zones d'appui (12a, 12b) qui sont agencées de part et d'autre de l'organe d'appui externe (14) selon une direction transversale (4) à la direction longitudinale (3).

7. Poignée amovible (1) selon l'une quelconque des revendications 1 à 6, **caractérisée en ce que** l'organe d'appui supérieur (15) comporte une face d'appui (16) destinée à coopérer avec une arête supérieure (66) de l'extrémité libre (65) de la portion recourbée (64).

8. Poignée amovible (1) selon la revendication 7, **caractérisée en ce que** la face d'appui (16) est inclinée ou incurvée et dans un plan de coupe vertical comprenant la direction longitudinale (3), une droite appartenant à la face d'appui (16) inclinée ou une tangente à la face d'appui (16) incurvée et la direction longitudinale (3) forment un angle β compris entre 50 et 70°, de préférence 60°.

9. Poignée amovible (2) selon l'une quelconque des revendications 1 à 8, **caractérisée en ce qu'**elle comporte une pièce de structure (10) s'étendant selon la direction longitudinale (3) et **en ce que** la pièce de structure (10) comporte l'organe d'appui externe (14), l'organe d'appui interne (12) et l'organe d'appui supérieur (15).

10. Poignée amovible (1) selon la revendication 9, **caractérisée en ce que** la pièce de structure (10) est mise en forme à partir d'une plaque métallique.

11. Poignée amovible (1) selon l'une quelconque des revendications 1 à 10, **caractérisée en ce que** les moyens de mise en pression comportent un ressort (47) de compression.

12. Poignée amovible (1) selon la revendication 11, **caractérisée en ce que** la poussée du ressort (47) sur le verrou (20) s'effectue selon la direction longitudinale (3) lorsque le verrou (20) est en position fermé.

13. Poignée amovible (1) selon l'une quelconque des revendications 11 à 12, **caractérisée en ce qu'**elle comporte des moyens de manoeuvre du verrou (20) à genouillère, lesdits moyens de manoeuvre comportant un levier (30), une bielle (40) et le ressort (47) de compression.

14. Poignée amovible (1) selon l'une quelconque des revendications 1 à 3, **caractérisée en ce que** la poignée comporte une patte (11) comportant l'organe d'appui interne (12).

15. Poignée amovible (1) selon la revendication 14, **caractérisée en ce que** l'organe d'appui supérieur (15) est formé par une face interne (17) de la patte (11).

16. Poignée amovible (1) selon l'une quelconque des revendications 1 à 15, **caractérisée en ce que** le verrou (20) est mobile par rapport aux organes d'appui interne (12), d'appui externe (14) et d'appui supérieur (15) qui sont tous les trois solidaires et fixes.

17. Ensemble formé par au moins un récipient de cuisson (60) comportant une paroi latérale (61) qui est prolongée vers le haut par une portion recourbée (64) vers l'extérieur comportant une extrémité libre (65) munie d'une arête supérieure (66) et d'une arête inférieure (67) et une poignée amovible (1) selon l'une quelconque des revendications 1 à 16.

## Patentansprüche

1. Abnehmbarer Griff (1), der dazu bestimmt ist, mit einem Kochgefäß (60) zusammenzuwirken, das eine Seitenwand (61) hat, die durch einen nach außen gekrümmten Abschnitt (64), der ein freies Ende (65) aufweist, nach oben fortgesetzt ist, wobei sich der abnehmbare Griff (1) in einer Längsrichtung (3) erstreckt und ein inneres Stützelement (12) und ein äußeres Stützelement (14), die dazu bestimmt sind, jeweils gegen eine Innenoberfläche (62) und eine Außenoberfläche (63) der Seitenwand (61) zu laufen, sowie ein oberes Stützelement (15) umfasst, das dazu bestimmt ist, gegen das freie Ende (65) des gekrümmten Abschnitts (64) zu laufen, wobei der abnehmbare Griff (1) einen Riegel (20) umfasst, der zwischen einer offenen Position und einer geschlossenen Position translatorisch bewegbar ist, **dadurch gekennzeichnet, dass** der Riegel (20) eine Sperrwand (21) aufweist, die dazu bestimmt ist, von dem inneren Stützelement (12) in der geöffneten Stellung des Riegels entfernt zu sein, und dazu bestimmt ist, eine Kraft auf das freie Ende (65) in der geschlossenen Position des Riegels (20) unter der Wirkung eines Druckbeaufschlagungsmittels (47) zu erzeugen, wobei die Kraft eine vertikale Komponente zum Sperren des freien Endes (65) des gekrümmten Abschnitts (64) gegen das obere Stützelement (15) aufweist.

2. Abnehmbarer Griff (1) nach Anspruch 1, **dadurch gekennzeichnet, dass** der Riegel (20) in Längsrichtung (3) translatorisch bewegbar ist.

3. Abnehmbarer Griff (1) nach einem der Ansprüche 1 bis 2, **dadurch gekennzeichnet, dass** die Sperrwand (21) geneigt oder gebogen ist, und dass in einer vertikalen Schnittebene, die die Längsrichtung (3) umfasst, eine zu der geneigten Sperrwand (21) gehörende Gerade oder eine Tangente an die gebogene Sperrwand (21) und die Längsrichtung einen Winkel a zwischen 40° und 50°, vorzugsweise von 45°, bilden.

4. Abnehmbarer Griff (1) nach einem der Ansprüche 1 bis 3, **dadurch gekennzeichnet, dass** die Sperrwand (21) dazu bestimmt ist, mit einer unteren Kante (67) des freien Endes (65) in der geschlossenen Position des Riegels (20) zusammenzuwirken.

5. Abnehmbarer Griff (1) nach einem der Ansprüche 1 bis 4, **dadurch gekennzeichnet, dass** die Sperrwand (21) erste und zweite Stützteile (21a, 21b) aufweist, die auf beiden Seiten des inneren Stützelements (12) in einer Richtung (4) quer zu der Längsrichtung (3) angeordnet sind.

6. Abnehmbarer Griff (1) nach einem der Ansprüche 1 bis 5, **dadurch gekennzeichnet, dass** das innere Stützelement (12) erste und zweite Stützbereiche (12a, 12b) aufweist, die auf beiden Seiten des äußeren Stützelements (14) in einer Richtung (4) quer zu der Längsrichtung (3) angeordnet sind.

7. Abnehmbarer Griff (1) nach einem der Ansprüche 1 bis 6, **dadurch gekennzeichnet, dass** das obere Stützelement (15) eine Stützfläche (16) aufweist, die dazu bestimmt ist, mit einer oberen Kante (66) des freien Endes (65) des gekrümmten Abschnitts (64) zusammenzuwirken.

8. Abnehmbarer Griff (1) nach Anspruch 7, **dadurch gekennzeichnet, dass** die Stützfläche (16) geneigt oder gebogen ist und in einer vertikalen Schnittebene, die die Längsrichtung (3) umfasst, eine gerade Linie, die zu der geneigten Stützfläche (16) gehört, oder eine Tangente an der gebogenen Stützfläche (16) und die Längsrichtung (3) einen Winkel β zwischen 50° und 70°, vorzugsweise von 60°, bilden.

9. Abnehmbarer Griff (2) nach einem der Ansprüche 1 bis 8, **dadurch gekennzeichnet, dass** er ein in Längsrichtung (3) verlaufendes Strukturteil (10) aufweist, und dass das Strukturteil (10) das äußere Stützelement (14), das innere Stützelement (12) und das obere Stützelement (15) aufweist.

10. Abnehmbarer Griff (1) nach Anspruch 9, **dadurch gekennzeichnet, dass** das Strukturteil (10) aus einer Metallplatte geformt ist.

11. Abnehmbarer Griff (1) nach einem der Ansprüche 1 bis 10, **dadurch gekennzeichnet, dass** die Druckmittel eine Druckfeder (47) aufweisen.

12. Abnehmbarer Griff (1) nach Anspruch 11, **dadurch gekennzeichnet, dass** der Schub der Feder (47) auf den Riegel (20) in der Längsrichtung (3) erfolgt, wenn sich der Riegel (20) in der geschlossenen Position befindet.

13. Abnehmbarer Griff (1) nach einem der Ansprüche 11 bis 12, **dadurch gekennzeichnet, dass** er Mittel zum Betätigen des Riegels (20) mit Kniehebel aufweist, wobei die Mittel zum Betätigen einen Hebel (30) und eine Verbindungsstange (40) und die Druckfeder (47) aufweisen.

14. Abnehmbarer Griff (1) nach einem der Ansprüche 1 bis 3, **dadurch gekennzeichnet, dass** der Griff eine Lasche (11) aufweist, die das innere Stützelement (12) aufweist.

15. Abnehmbarer Griff (1) nach Anspruch 14, **dadurch gekennzeichnet, dass** das obere Stützelement (15) von einer Innenfläche (17) der Lasche (11) gebildet ist.

16. Abnehmbarer Griff (1) nach einem der Ansprüche 1 bis 15, **dadurch gekennzeichnet, dass** der Riegel (20) relativ zu dem inneren Stützelement (12), dem äußeren Stützelement (14) und dem oberen Stützelement (15) beweglich ist, die alle drei fest verbunden und feststehend sind.

17. Anordnung, die durch mindestens ein Kochgefäß (60), das eine Seitenwand (61) aufweist, die von einem nach außen gekrümmten Abschnitt (64) nach oben fortgesetzt ist, der ein freies Ende (65) aufweist, das mit einer oberen Kante (66) und eine unteren Kante (67) versehen ist, und einen abnehmbaren Griff (1) nach einem der Ansprüche 1 bis 16 gebildet ist.

## Claims

1. Removable handle (1) intended to cooperate with a cooking vessel (60) having a side wall (61) which is extended towards the top by a curved portion (64) towards the outside comprising a free end (65), said removable handle (1) extending along a longitudinal direction (3) and comprising an inner support member (12) and an outer support member (14) intended to come against, respectively, an inner surface (62) and an outer surface (63) of the side wall (61), as well as an upper support member (15) intended to come against the free end (65) of the curved portion (64), said removable handle (1) comprising a latch (20) mobile in translation between an open position and a closed position, **characterised in that** the latch (20) comprises a blocking wall (21) intended to be extended from the inner support member (12) in the open position of the latch and intended to generate a force on the free end (65) in the closed position of the latch (20), under the action of a pressurised means (47), said force comprising a vertical component for blocking the free end (65) of the curved portion (64) against the upper support member (15).

2. Removable handle (1) according to claim 1, **characterised in that** the latch (20) is mobile in translation along the longitudinal direction (3).

3. Removable handle (1) according to any one of claims 1 to 2, **characterised in that** the blocking wall (21) is inclined or curved and **in that**, in a vertical cross-sectional plane comprising the longitudinal direction (3), a straight line belonging to the inclined blocking wall (21) or a tangent to the curved blocking wall (21) and the longitudinal direction form an angle α between 40 and 50°, preferably 45°.

4. Removable handle (1) according to any one of claims 1 to 3, **characterised in that** the blocking wall (21) is intended to cooperate with a lower edge (67) of the free end (65) in the closed position of the latch (20).

5. Removable handle (1) according to any one of claims 1 to 4, **characterised in that** the blocking wall (21) comprises first and second support portions (21a, 21b) which are arranged on either side of the inner support member (12) along a transversal direction (4) to the longitudinal direction (3).

6. Removable handle (1) according to any one of claims 1 to 5, **characterised in that** the inner support member (12) comprises first and second support zones (12a, 12b) which are arranged on either side of the outer support member (14) along a transversal direction (4) to the longitudinal direction (3).

7. Removable handle (1) according to any one of claims 1 to 6, **characterised in that** the upper support member (15) comprises a support face (16) intended to cooperate with an upper edge (66) of the free end (65) of the curved portion (64).

8. Removable handle (1) according to claim 7, **characterised in that** the support face (16) is inclined or curved and in a vertical cross-sectional plane comprising the longitudinal direction (3), a straight line belonging to the inclined support face (16) or a tangent to the curved support face (16) and the longitudinal direction (3) form an angle β of between 50 and 70°, preferably 60°.

9. Removable handle (2) according to any one of claims 1 to 8, **characterised in that** it comprises a structural part (10), extending along the longitudinal direction (3) and **in that** the structural part (10) comprises the outer support member (14), the inner support member (12) and the upper support member (15).

10. Removable handle (1) according to claim 9, **characterised in that** the structural part (10) is shaped from a metal plate.

11. Removable handle (1) according to any one of claims 1 to 10, **characterised in that** the pressurising means comprise a compression spring (47).

12. Removable handle (1) according to claim 11, **characterised in that** the thrust of the spring (47) on the latch (20) is made along the longitudinal direction (3) when the latch (20) is in the closed position.

13. Removable handle (1) according to any one of claims 11 to 12, **characterised in that** it comprises means for manoeuvring the toggle latch (20), said manoeuvring means comprising a lever (30), a connecting rod (40) and the compression spring (47).

14. Removable handle (1) according to any one of claims 1 to 3, **characterised in that** the handle comprises a base (11) comprising the inner support member (12).

15. Removable handle (1) according to claim 14, **characterised in that** the upper support member (15) is formed by an inner face (17) of the base (11).

16. Removable handle (1) according to any one of claims 1 to 15, **characterised in that** the latch (20) is mobile with respect to the inner support member (12), outer support member (14) and upper support member (15) which are, all three, secured and fixed.

17. Unit formed by at least one cooking vessel (60) comprising a side wall (61) which is extended towards the top by a curved portion (64) towards the outside comprising a free end (65) equipped with an upper edge (66) and a lower edge (67) and a removable handle (1) according to any one of claims 1 to 16.
